# EUROPEAN PATENT APPLICATION

(11) **EP 1 380 787 A2**
(43) Date of publication of application: **14.01.2004**
(21) Application number: 03254339.9
(22) Date of filing: 09.07.2003
(51) Int. Cl.: F16L 11/08, B29D 23/00

(54) **Multiple layer hose, method of producing a multiple layer hose and apparatus therefor**

(30) Priority: 12.07.2002 GB 0216180
(71) Applicant: Nelson Stokes Ltd., Camelford, Cornwall PL32 9RA (GB)
(72) Inventor: Bullen, Michael George, Hayle, Cornwall TR27 6AT (GB); Howes, Robert Edward Barry, Tintagel, Cornwall PL34 0EH (GB)
(74) Representative: Shelley, Mark Raymond

(57) **Abstract**

In one aspect the present invention provides a multilayer hose (10) comprising an inner layer (12) surrounded by a first layer of reinforcement material (14) around which is formed a second layer of reinforced material (18) and over which is placed an outer cover (20), in which the two reinforcement layers (14, 18) have an intermediate layer of elastomeric material (16) applied as a water-based emulsion. In another aspect of the invention there is a method of producing a multilayer hose (10) of the type comprising internal and external flexible resilient layers between which is located a reinforcement layer, in which inner and outer reinforcement layers (14, 18) have an intermediate bonding layer (16); the said method comprising the steps of: providing a first reinforcement layer (14) over the said internal flexible resilient layer; applying a water-based elastomeric emulsion over the said first reinforcement layer to form an intermediate layer (16); drying the said water-based emulsion to reduce the moisture content thereof; providing a second reinforcement layer (18) over the said elastomeric layer (16) and subsequently curing the said elastomeric layer (16) to bond the two reinforcement layers (14, 18) together.

## Description

This invention relates to a multilayer hose, method of producing such a hose and an apparatus therefor, and in particular concerns a flexible hose suitable for use in high pressure hydraulic systems such as vehicle braking systems and the like.

Multilayer hydraulic hoses usually comprise an inner layer of elastomeric material surrounded by a first braided layer of filamentary material around which is formed a second braided layer of filamentary material over which is placed an elastomeric outer layer. In many embodiments the elastomeric material of the inner and outer layers is rubber and the braided filamentary material is rayon. The first and second rayon layers act as a reinforcement for high-pressure fluid application.

A problem associated with hoses of the above mentioned type is that relative movement between the first and second layers of the braided material can cause degradation of the braided layers over time. Degradation of the layers is particularly significant in applications where high pressure hydraulic hoses are subject to movement, flexure and/or vibrations, for example in motor vehicles where reinforced elastomeric hoses are used to connect wheel brake callipers to the ends of metal brake pipes fixed to the vehicle body.

According to an aspect of the invention a multilayer hose comprises an inner layer surrounded by a first layer of reinforcement material around which is formed a second layer of reinforced material and over which is placed an outer cover, in which the two reinforcement layers have an intermediate layer of elastomeric material applied as a water-based emulsion.

The intermediate layer between the layers of reinforced material provides a tougher and longer life hose since the intermediate layer reduces movement between the layers of reinforcement material. The hose of the above aspect of the invention can be produced in a cost effective manner and environmentally conscious way compared with more traditional methods using solvent based rubber.

Preferably, the intermediate layer has a moisture content substantially in the range 0.5 to 1.5%. It is necessary to reduce the moisture content of the intermediate layer to prevent blistering of the outer layer when heat is applied during the vulcanisation process. It is preferred that the moisture content is 1% or less by weight since blistering can occur in the outer layer during vulcanisation if the moisture content is greater than 1%.

Preferably, the intermediate layer comprises a water-based rubber. It is preferred that the reinforcement layers are bonded together using a water based rubber which readily bonds the reinforcement layers together.

In preferred embodiments, the intermediate layer comprises a water based neoprene rubber.

Preferably, at least one of the said first and second reinforcement layers comprises a layer of braided filamentary material. This readily enables the hose to contain high-pressure fluid without distortion or rupture of the hose in use.

The said first and second reinforcement layers may comprise the same or similar material. It is preferred that both the first and second reinforcement layers comprise braided rayon filaments treated with resorcinol formaldehyde solution. Alternatively Kevlar (rtm) or PVA may be used in place of rayon - the first is most suitable for the first braid and the second for the second braid.

Preferably, the said inner layer and outer cover comprise internal and external flexible resilient layers. In preferred embodiments, the internal and external flexible resilient layers comprise an elastomeric material. This readily enables the hose to be used in applications where pressure and movement of the hose is required, for example in vehicle braking systems.

According to another aspect of the invention there is a method of producing a multilayer hose of the type comprising internal and external flexible resilient layers between which is located a reinforcement layer, in which inner and outer reinforcement layers have an intermediate bonding layer; the said method comprising the steps of: providing a first reinforcement layer over the said internal flexible resilient layer; applying a water-based elastomeric emulsion over the said first reinforcement layer to form an intermediate layer; drying the said water-based emulsion to reduce the moisture content thereof; providing a second reinforcement layer over the said elastomeric layer and, before or after the outer layer is applied, curing the said elastomeric layer to bond the two reinforcement layers together. Preferably the drying step comprises the step of passing air over the said emulsion. In the above mentioned method conventional drying methods may be employed in the production process to reduce the moisture content of the water based emulsion when forming the intermediate layer. By applying the intermediate layer as a water based emulsion the use of solvent based rubbers can be avoided. This is particularly advantageous since the drying air can be vented directly to the atmosphere when a water-based emulsion is used. Environmental regulations do not allow solvents to be dried in the same way and significant costs are therefore usually associated with treating and/or recovering waste solvent products during drying.

In preferred method, the step of applying the said water based emulsion comprises the step of feeding the said internal resilient layer and said first reinforcement layer into a reservoir of the said emulsion. In this way it is possible to readily achieve an even coating of the water based emulsion over the surface of the reinforcement layer to be coated.

The braided reinforcement layer or layers readily provides a flexible layer or reinforcement within the hose for containing pressurised fluid in the hose.

Preferably, at least one of the said first and second reinforcement layers comprises a layer of filamentary material and the step of applying the said reinforcement layer(s) comprises the step of braiding the said filamentary material over the surface of a respective adjacent inner layer. In this way it is possible to produce a multilayer hose according to the first mentioned aspect of the invention in a continuous production environment. This readily enables the multilayer hose to be produced in a cost effective, economical and timely manner.

According to a further aspect of the invention there is provided an apparatus for producing a multilayer hose having inner and outer flexible resilient layers with two braided filamentary layers between them and an intermediate water-based elastomeric emulsion bonding layer between the said braided layers, the said apparatus comprising: a first braiding station, an application station at which water-based elastomeric emulsion is applied, a drying station at which moisture content of the said elastomeric bonding layer is reduced to a predetermined level, and a second braiding station at which a further filamentary braided layer is formed over the intermediate layer.

Preferably, the application station comprises a reservoir for the water-based emulsion and means for feeding the inner layers of the hose through the emulsion.

In preferred embodiments, the said drying station comprises air drying means for reducing the said moisture content from the said intermediate layer. The air drying means readily enables the moisture content of the intermediate layer to be reduced to less than 15%, preferably in the region 7-10% in a preliminary drying step.

The drying station may further comprise infrared drying means for further reducing the moisture content from the said intermediate layer. This readily enables the moisture content to be reduced to less than 1%. With the moisture content reduced to 1% or less blistering of the outer layer during vulcanisation can be avoided. Curing of the hose is achieved at high temperature by passing it through a liquid salt bath at 195°C (salt melts at 175°C). As an alternative, it is known to use superheated steam in an autoclave.

The combined drying processes, that is during interleaf application, and prior to application of the outer cover and subsequent vulcanisation, reduces the moisture content to a level where it has no affect on the finished product.

Various embodiments of the invention will now be more particularly described, by way of example, with reference to the accompanying drawings in which,
Figure 1 is a perspective view of a multilayer hose with each layer cut back to show the detail of each layer of the hose; and
Figure 2 is a schematic view of an apparatus suitable for producing the multilayer hose of Figure 1.

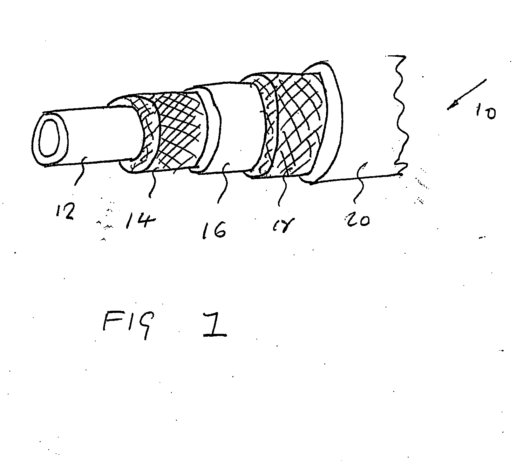

Referring to Figure 1 a multilayer hose 10 comprises an inner layer 12 of an elastomeric rubber, a first layer of reinforcement material 14 which comprises braided rayon filaments treated with resorcinol formaldehyde solution, an intermediate layer 16 of an elastomeric water based neoprene rubber, a second layer of reinforcement material 18 comprising braided rayon filaments, and an outer elastomeric rubber layer 20. The layers 12 to 20 are arranged concentrically and coaxially with respect to one another in a circular cross section hose, only part of which is shown in the drawing of Figure 1. The layers 12 to 20 constitute a flexible resilient hose suitable for use in a high-pressure applications such as in a hydraulic or pneumatic system, for example in a vehicle hydraulic braking system.

The intermediate layer 16 which is applied as a water based emulsion bonds the inner and outer braided reinforcement layers 14 and 18 together such that only limited relative movement between the reinforcement layers is possible, and give the additional property that it improves (ie lowers) water permeability to allow the hose to resist water penetration better even over long periods of use in automotive environments where spray is present.

The water based neoprene rubber of the intermediate layer 16 comprises less than 1% moisture to prevent or at least reduce the likelihood of blistering of the outer layer 20 due to gaseous expansion of the moisture during vulcanisation.

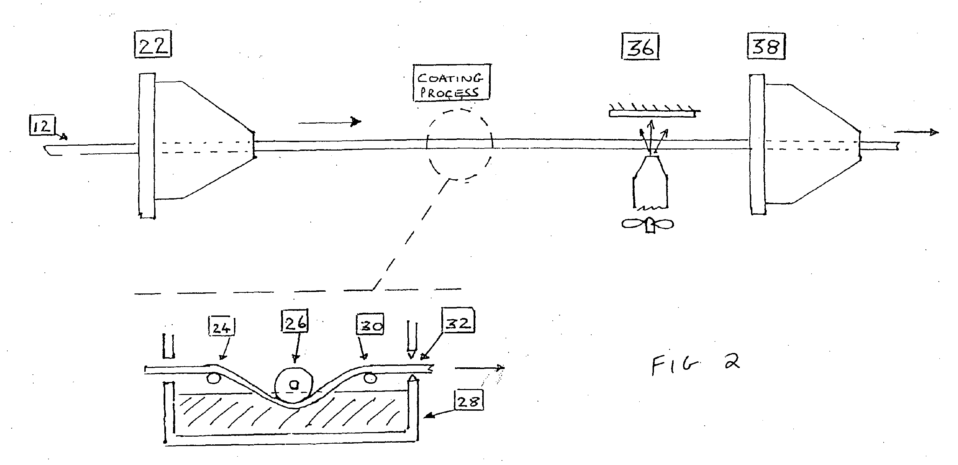

Referring now to Figure 2 which schematically illustrates a production apparatus for producing the hose of Figure 1 according to a method of one aspect of the present invention. As shown in the drawing the apparatus comprises a first braiding station 22 for braiding a first filamentary layer of rayon filaments over the external surface of the inner layer 12. The two layer hose is fed continuously from the braiding station 22 over rollers 24, 26 and is immersed in a reservoir 28 comprising a water based emulsion of neoprene rubber which coats the reinforced layer 14 as it is fed through the reservoir 28. The coated hose exits the reservoir 28 by means of a further roller 30 and passes through a wiper station 32 which removes excess emulsion from the hose, before passing into an air drying station 36. In the air drying station air is passed over the coated hose until the moisture content is reduced to between 7 and 10% of the emulsion material forming the intermediate layer 16. On leaving the drying station 36 the coated hose is fed to a second braiding station 38 where the second and radially outermost reinforcement layer 18 is braided onto the outer surface of the intermediate layer 16 with the intermediate layer bonding the first and second braided layers 14 and 18 together. After this and immediately prior to application of the outer coating the hose is passed through an infrared drier and into a cross head extruder where the outer cover is applied.

The outer layer 20 which comprises a flexible resilient material such as rubber is then extruded over the outer surface of the layer at an extrusion station (not shown) downstream of the second braiding station 38.

Although aspects of the invention have been described with reference to the embodiments shown in the accompanying drawings it is to be understood that the invention is not limited to those precise embodiments and that changes and modifications maybe effected without exercise of further inventive skill. For example in the method described with reference to Figure 2 the water based neoprene rubber emulsion can be applied by spraying or wiping it onto the outer surface of the braided layer 14. In addition other water-based emulsions other than neoprene rubber may be used in other embodiments of the invention.

It will be appreciated that although there is no absolute required thickness for the intermediate layer 16 a minimum thickness can be determined in accordance with the adhesion that is achieved between the braided layers 14 and 18 by the intermediate layer 16. In addition it is to be understood that the moisture content of the emulsion and the particle size thereof is not critical to the various aspects of the present invention disclosed herein.

## Claims

1. A multilayer hose (10) characterising an inner layer (12) surrounded by a first layer of reinforcement material (14) around which is formed a second layer of reinforced material (18) and over which is placed an outer cover (20), in which the two reinforcement layers (14, 18) have an intermediate layer of elastomeric material (16) applied as a water-based emulsion.

2. A hose (10) as claimed in Claim 1 **characterised in that** the intermediate layer (16) has a moisture content substantially in the range 0.5 to 1.5%.

3. A hose (10) as claimed in Claim 2 **characterised in that** the moisture content is substantially 1%.

4. A hose (10) as claimed in any one of Claims 1 to 3 **characterised in that** the intermediate layer (16) comprises a water based rubber.

5. A hose (10) as claimed in Claim 4 **characterised in that** the intermediate layer (16) comprises a water based neoprene rubber.

6. A hose (10) as claimed in any preceding claim **characterised in that** at least one of the said first and second reinforcement layers (14, 18) comprises a layer of braided filamentary material.

7. A hose (10) as claimed in any preceding claim **characterised in that** the said first and second reinforcement layers (14, 18) comprise the same or similar material.

8. A hose (10) as claimed in any preceding claim **characterised in that** the said inner layer (12) and outer cover (20) comprise internal and external flexible resilient layers.

9. A hose (10) as claimed in Claim 8 **characterised in that** the internal and external flexible resilient layers comprise an elastomeric material.

10. A method of producing a multilayer hose (10) of the type comprising internal and external flexible resilient layers between which is located a reinforcement layer, in which inner and outer reinforcement layers (14, 18) have an intermediate bonding layer (16); the said method comprising the steps of:
providing a first reinforcement layer (14) over the said internal flexible resilient layer;
applying a water-based elastomeric emulsion over the said first reinforcement layer to form an intermediate layer (16);
drying the said water-based emulsion to reduce the moisture content thereof;
providing a second reinforcement layer (18) over the said elastomeric layer (16) and subsequently curing the said elastomeric layer (16) to bond the two reinforcement layers (14, 18) together.

11. A method as claimed in Claim 10 **characterised in that** the said drying step comprises the step of passing air over the said emulsion.

12. A method as claimed in Claim 10 or Claim 11 **characterised in that** the moisture content of the said intermediate layer (16) is reduced to lie substantially in the range of 0.5 to 1.5% by weight in the drying step.

13. A method as claimed in any one of Claims 10 to 12 **characterised in that** the said emulsion comprises a water based rubber.

14. A method as claimed in Claim 13 **characterised in that** the said emulsion comprises a water based neoprene rubber.

15. A method as claimed in any one of Claims 10 to 14 **characterised in that** the step of applying the said water based emulsion comprises the step of feeding the said internal resilient layer and said first reinforcement layer (14) into a reservoir of the said emulsion.

16. A method as claimed in any one of Claims 10 to 15 **characterised in that** at least one of the said first and second reinforcement layers (14, 18) comprises a layer of filamentary material braided and the step of applying the said reinforcement layer(s) (14, 18) comprises the step of braiding the said filamentary material over the surface of a respective adjacent inner layer.

17. Apparatus for producing a multilayer hose (10) having inner and outer flexible resilient layers with two braided filamentary layers (14, 18) between them and an intermediate water-based elastomeric emulsion bonding layer (16) between the said braided layers (14, 18), the said apparatus characterising: a first braiding station (22), an application station at which water-based elastomeric emulsion is applied, a drying station (36) at which moisture content of the said elastomeric bonding layer (16) is reduced to a pre-determined level, and a second braiding station (38) at which a further filamentary braided layer (18) is formed over the intermediate layer (16).

18. Apparatus as claimed in Claim 17 **characterised in that** the said application station comprises a reservoir (28) for the said water based emulsion and means for feeding the inner layers of the hose through the said emulsion.

19. Apparatus as claimed in Claim 17 or Claim 18 wherein the said drying station (36) comprises air drying means for reducing the said moisture content from the said intermediate layer (16).

20. Apparatus as claimed in Claim 19 wherein the said drying station (36) further comprises infrared drying means for further reducing the moisture content from the said intermediate layer (16).
